# EUROPEAN PATENT SPECIFICATION

(11) **EP 0 635 796 B1**
(45) Date of publication and mention of the grant of the patent: **07.02.2001**
(21) Application number: 93305651.7
(22) Date of filing: 19.07.1993
(51) Int. Cl.: G06F 17/30

(54) **Compactly encoded stored string set and its use**
Gespeicherter, kompakt kodierter Zeichenreihensatz und dessen Anwendung
Série de chaînes de caractères compactement encodée, stockée et son utilisation

(43) Date of publication of application: 25.01.1995
(73) Proprietor: XEROX CORPORATION, Rochester, New York 14644 (US)
(72) Inventor: Kaplan, Ronald M., Palo Alto, California 94306 (US); Kay, Martin, Menlo Park, California 94025 (US); Maxwell III, John T., Cupertino, California 95014 (US)
(74) Representative: Walker, Antony James Alexander

(56) References cited:
- US-A- 4 285 049
- ACM TRANSACTIONS ON DATABASE SYSTEMS vol. 8, no. 1 , March 1983 pages 15 - 40 R.L. HASKIN ET AL. 'Operational characteristics of a hardware-based pattern matcher'

## Description

The present invention relates to data stored in a compactly encoded form.

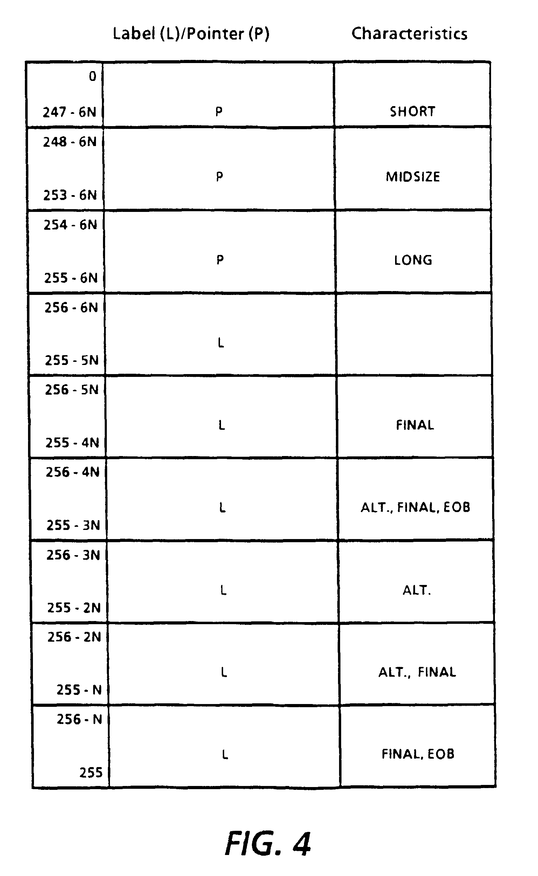

Lucchesi, C.L. and Kowaltowski, T., "Applications of Finite Automata Representing Large Vocabularies," *Software―Practice and Experience*, Vol. 23(1), January 1993, pp. 15-30, describe techniques for compressing a very large vocabulary of words into a minimal acyclic deterministic finite automaton, motivated by the problem of implementing an efficient spelling checker. Fig. 4 shows such an automaton for all forms of certain English verbs. A technique for constructing the automaton is described beginning on page 18; the technique includes a minimization step. The data structure is described at pages 19-20: Each state is represented as an array with *N* entries, where *N* is the size of the alphabet. Most entries correspond to non-existent transitions, and state arrays can therefore be shifted and overlapped in such a way that existing entries do not collide. To each state is attached one *N*-bit vector that selects the existing transitions for the state. Array packing is done by a greedy algorithm, which almost always gives optimal results due to a very large percentage of states with one, two, or three transitions. Also, the number of distinct bit-vectors is much lower than the number of states, so that many are shared. Besides packing the state arrays, short (relative) and long (absolute) state indices are used. For Portugese, letters are stripped of their diacritical marks, the positions of which are encoded after the word terminator.

The present invention provides a product according to claim 1 of the appended claims. The invention further provides a method of searching string set data according to claim 13 of the appended claims.

The invention futher provides a programmable apparatus when suitably programmed for carrying out the method of claim 13.

The invention alleviates the problem of compactly storing data defining a set of strings, such as words, numbers, and other strings that include alphabetical, phonetic, ideographic, or pictographic elements; numerical elements such as numbers; punctuation marks; diacritical marks; mathematical and logical symbols; and other discrete elements that can appear in a written or printed form of a language, all of which are referred to herein as "characters". The invention is based on the discovery of several related techniques that reduce the amount of data necessary to represent a set of strings.

A first technique uses the order of items of data to hold certain information that would otherwise require additional data. The information in a set of strings can include various type of information including information about the identities of characters and information about how to search the set of strings with a string of characters. The first technique is a data-ordering technique that reduces the data necessary to indicate how to search.

The data-ordering technique positions the items of data in a sequence. A first data item in the sequence includes label information and search information. The label information can indicate one of a set of character types, such as the character types of an alphabet. The search information includes next information and alternative information.

The next information indicates whether the first data item has a next data item to which search can continue if a current character in the string matches the label information. The next data item is accessible based on the position in the sequence of the first data item. The alternative information indicates whether the first data item has an alternative data item to which search can continue if the current character in the string does not match the label information. The alternative data item is accessible based on the position in the sequence of the first data item.

The data-ordering technique can be implemented by positioning the data items so that each data item that has a next data item is immediately followed by the next data item. Also, if a data item does not have a next data item but has an alternative data item, the alternative data item immediately follows the data item. Finally, if a data item has neither a next data item nor an alternative data item, it can be immediately followed by the alternative data item for the nearest preceding data item in the sequence that has both a next data item and an alternative data item.

As a result of this ordering, pointers or other additional data to indicate locations of a data item's next and alternative data items are unnecessary. This can significantly reduce the data necessary to represent a string set.

To search the sequence with a string of characters, a character of the string can be matched against the label information of an item of data in the sequence. If the character matches and the item of data has a next data item, then the search moves to the immediately following item of data and tries to match the next character of the string. If the character does not match and the item of data has an alternative data item, the search moves to the alternative; this can be done by going through the items of data until as many items without nexts have been reached as items with alternatives, after which the immediately following item of data is the alternative sought. If the character does not match and the item of data does not have an alternative, the string is not in the set. Similarly, if the last character of the string is matched by an item of data that is not the final character of a string in the set, the string is not in the set.

The second technique builds on the first technique by compactly encoding the items of data. In a system in which data is handled in units of *N* bits, it may be possible to encode each item of data in a single *N*-bit unit. It may also be advantageous to encode some items of data in two *N*-bit units.

For example, each data item could include label information, next information, and alternative information as described above, together with final information indicating whether a string of characters being matched is in the set of strings if its last character matches the label information. In this case there would be six possible combinations of final, next, and alternative information--final + next + alternative; final + next + no alternative; final + no next + alternative; final + no next + no alternative; not final + next + alternative; and not final + next + no alternative.

Therefore, an encoding in units of *N* bits is possible if 2^{*N*}≧6*L*, where *L* is the number of labels, such as the letters in the alphabet. For eight-bit bytes, *N*=8, so that items of data with as many as 42 different labels, i.e. the quotient of 256 divided by 6, could be encoded in this manner.

Alternatively, a special byte value can indicate that a data item has no next, so that each data item is encoded in one byte if it has a next and in two bytes if it does not. In this case, there are only four possible combinations of final and alternative information in a first byte--final + alternative; final + no alternative; not final + alternative; and not final + no alternative. Therefore, the final and alternative information can each use one bit of each byte. For eight-bit bytes, items of data with as many as 64 different labels, i.e. the quotient of 256 divided by 4, could be encoded in this manner.

The third technique also builds on the first and second techniques by reducing redundancy with pointers. If an entire string set is represented by a sequence of items of data, parts of the sequence may be identical. For example, in English, the characters "ing" occur at the end of many strings, and the parts of the sequence representing the ends of those strings may be identical. In this case, the length of the sequence can be reduced by including the identical part only once, with a pointer to it at each of the other positions in the sequence where it would occur.

This technique can be implemented using byte values not used to encode items of data. For one byte encoding, if 2^{*N*}>6*L*, then (2^{*N*}-6*L*) byte values are available for pointers. For encoding with a special no-next byte, the number of byte values are available for pointers is (2^{*N*}-4*L*), allowing 2*L* more pointers.

For string sets of useful sizes, however, a one byte pointer will not provide enough information to indicate a unique position in the sequence because the sequence will include more than 256 positions. Therefore, the byte values available for pointers can each be used to access additional data for obtaining a full length pointer of two or more bytes that indicates a unique position in the sequence. One of these byte values can indicate, for example, a number of immediately following bytes to be used to obtain a full length pointer. Or a byte value can indicate an entry in a lookup table that includes a full length pointer.

The techniques can be implemented in a product that includes a storage medium on which data is stored. The stored data includes string set data indicating a set of strings. The string set data include a plurality of items of data. Some of the items include label information, next information, and alternative information, and the items are ordered so that a machine search can reach an item's next data item and alternative data item based on the positions of the data items, as described above. Each item of data can be encoded in one of the ways described above. The items can be ordered in a sequence, and the sequence can include pointers to reduce redundancy. The stored data can also include lookup tables with entries that can be accessed with short length pointers to obtain full length pointers.

The product can also include a processor connected for accessing the stored data. The stored data can also include instructions the processor can execute to determine whether a string is one of the strings in the set.

The techniques described above are advantageous because they reduce the amount of data necessary to represent a string set. In addition, the techniques allow rapid search to determine whether a string is in the string set.

Embodiments of the invention will now be described, by way of example, with reference to the accompanying drawings, in which:
Fig. 1 is a graphical representation of the states and transitions of part of a simple data structure representing a set of strings;
Fig. 2 shows a sequence of transition units corresponding to the data structure of Fig. 1;
Fig. 3 shows a more compressed form of the sequence of transition units of Fig. 2;
Fig. 4 is a byte map showing how the values which a byte may take will include some values containing a label and additional information and other values which are pointer data units;
Fig. 5 is a flowchart showing steps by which an FSM data structure may be encoded;
FIg. 6 is a flowchart showing a routine which may be used in Fig. 5 to count the incoming pointers to each state of a data structure and to limit the cost of each state;
Fig. 7 is a flowchart showing a routine which may be used in Fig. 5 to assign pointer sizes and indexes to the states of an FSM data structure;
Fig. 8 is a flowchart showing a routine which may be used in Fig. 5 to assign locations to the transition units of the FSM data structure;
Fig. 9 is a flowchart showing a routine which may be used in Fig. 5 to write a file containing the encoded FSM data structure, including both tables and transition units with assigned byte values in order;
Fig. 10 is a memory map showing the file containing the encoded FSM data structure written according to the routine of Fig. 9;
Fig. 11 is a flowchart showing a method for looking up a received character string in the encoded FSM data structure of Fig. 10;
Fig. 12 is a block diagram showing an encoding apparatus; and
Fig. 13 is a block diagram showing a lookup apparatus, including the encoded data structure of Fig. 10.

### A. Encoded Data

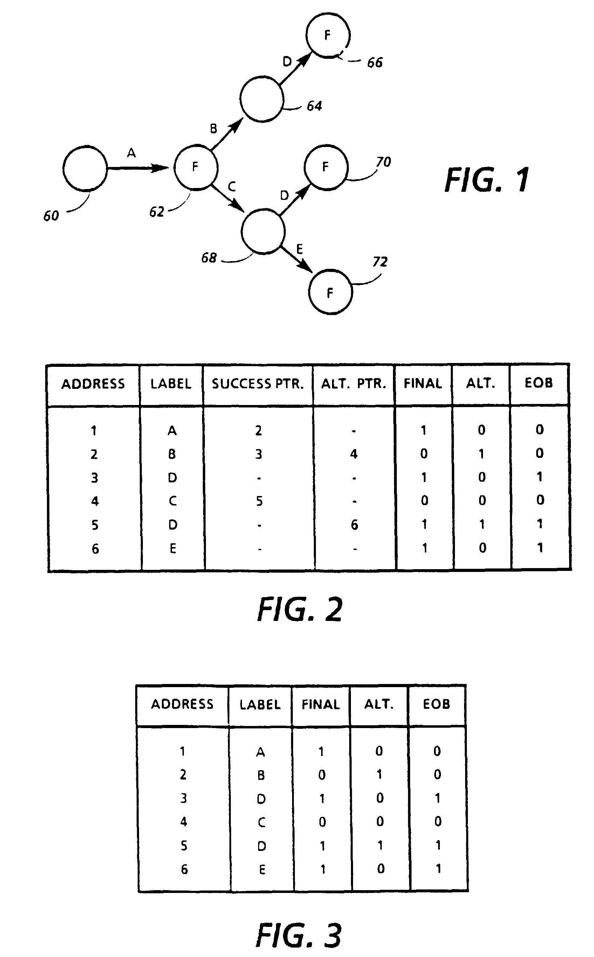

A product with data indicating a set of strings could be produced in many ways. Figs. 1-4 illustrate basic encoding techniques which result in compactly encoded data.

Fig 1 shows part of a simple finite state machine (FSM) data structure in graphical form, with the states shown as circles and the transitions between states shown as lines with arrows. State 60 may be referred to as the start state, while states 62, 66, 70 and 72 are all final states, shown as a letter "F" in a circle, meaning that one of the strings covered by the data structure ends in each of those states. Note that the data structure of Fig. 1 includes only the transitions which ultimately lead to states marked final, while the transitions which do not ultimately lead to final states have been omitted. In addition, the characters are represented by the characters A through E, and these characters thus serve as the labels of the transitions between the states which ultimately lead to final states. State 62 illustrates that a final state need not be at the end of a branch of the data structure, but may be at any state in the data structure.

Fig. 2 shows one encoding of the data structure of Fig. 1 into transition units. The information in the encoded data structure is shown as alphanumeric characters, although it will typically be stored in binary form in a memory. The memory addresses are shown in the left column, followed by a column showing the label field at each address. After the label field at each address are two fields for pointers, one to the transition unit which follows if the label corresponds to a received character and one to the subsequent alternative outgoing transition unit, if any. Each transition unit also includes a number of bit fields, as shown, which provide information about the transition to which it corresponds or the state to which it leads.

The information in Fig. 2 corresponds in a straightforward manner to the FSM data structure of Fig 1. The transition unit at address 1, for example, corresponds to the transition between states 60 and 62, and therefore has the character A in its label field. Its success pointer field contains the address of the first outgoing transition unit of state 62, which corresponds to the transition to state 64. If a received character corresponds to the label A at address 1, the transition unit at address 2 will be accessed for comparison with the next received character. Since state 60 has only one outgoing transition, there is no alternative outgoing transition unit, so that the alternative pointer field at address 1 contains no pointer and the alternative bit is set to zero. As shown in Fig. 1, state 62 is a final state, so that the final bit at address 1 is accordingly set to one. State 62 has two outgoing transitions, so that it is not the end of a branch of the data structure, and the end of branch ("EOB") bit at address 1 is also set to zero. In a similar manner, the transition unit at address 2 corresponds to the transition between states 62 and 64; address 3 corresponds to that between states 64 and 66; address 4 corresponds to that between states 62 and 68; address 5 corresponds to that between states 68 and 70; and address 6 corresponds to that between states 68 and 72.

The information in Fig. 2 includes information not only about the transitions in Fig. 1, but also about the states and the relationships between states and transitions. The information about each transition in Fig. 1 includes its label, of course, and the information about each state includes the indication of whether or not it is final. The label is encoded in the label field of each transition unit corresponding to a transition, and the final bit is encoded in each transition unit corresponding to one of the transitions leading into a final state, so that these items of information are encoded entirely in the transition units. Similarly, all the information about the relationships between states and transitions is encoded, though not quite as simply. The set of transitions leading to a state can be found by finding the transition units whose success pointer fields have the address of the first outgoing transition from that state. The set of transitions leaving a state may similarly be found from any of the transition units leading to that state, and includes the first outgoing transition unit, with its address in the success pointer field of each of the incoming transition units, together with the alternative transition units, each of whose addresses will be in the alternative pointer field of the first outgoing transition unit or of one of the other alternative transition units.

From the above analysis of the information in Fig. 2, it can be seen that the alternative and EOB bits are redundant. The alternative bit is set to one only when there is an alternative pointer, while the EOB bit is set to one only when there is no success pointer. This suggests that these bits could be eliminated, but Fig. 3 is an encoding of the same data structure in which these bits are retained, while the success and alternative pointers are eliminated, resulting in a greater reduction in the space needed for the encoded data structure than if the alternative and EOB bits were eliminated. This compaction is possible in part because the transition units are ordered into subsequences so that the first outgoing transition unit from each state immediately follows one of the transition units leading into that state. Also, the transition units are ordered so that each subsequent alternative outgoing transition unit immediately follows the transition units depending from the previous outgoing transition unit from the same state.

In Fig. 3, one of the subsequences of transition units includes addresses 1-3, all containing first outgoing transition units. Another subsequence includes addresses 4 and 5, with the transition unit at address 4 leading to the state whose first outgoing transition unit is at address 5. In other words, each of the first outgoing transition units in the FSM data structure of Fig. 1 is encoded so that it immediately follows the transition unit leading to it. Therefore, if a received character corresponds to a label from a transition unit, no success pointer is necessary to find the first outgoing transition unit from the resulting state―it can be found simply by incrementing the memory address being accessed.

Similarly, the transition units of Fig. 3 are ordered so that the subsequent alternative outgoing transition units at addresses 4 and 6 each follow immediately after the transition units depending from the preceding outgoing transition units at addresses 2 and 5, respectively. Within each set of transition units including and depending from a transition unit which has an alternative bit, the last transition unit will be the only one for which the total number of EOB bits encountered is equal to the number of alternative bits encountered. The EOB bit at address 3 is thus paired with and balanced against the alternative bit at address 2, while the EOB bit and the alternative bit at address 5 balance each other. In each case, the subsequent alternative outgoing transition unit can be found by proceeding through the addresses, keeping track of the alternative and EOB bits, and incrementing to the next address when the alternative bits and EOB bits balance. Here again, no alternative pointer is necessary.

Although the encodings shown in Figs. 2 and 3 each include the entire FSM data structure in Fig. 1, the encoding techniques could be applied to any appropriate part of an FSM data structure. Furthermore, as will be seen below, pointers can be retained in the encoded data structure where appropriate, either to reduce its size or to increase speed of comparison with a received string. Also, as discussed in greater detail below, the information in each of the transition units of Fig. 3 can be further compressed, primarily because, for an FSM data structure with no failure states, the final bit cannot be zero when the EOB bit is one. This further compression also makes possible the efficient use of pointer data units of more than one length.

The encoded FSM data structure will typically be stored in a memory having bytes of 8-bit length. Fig. 4 is an example of a byte map of all 256 values which an 8-bit byte may take, including both those values which contain a label and additional information and those values which are allocated to pointer data units.

The byte values allocated to pointer data units are illustratively divided into three blocks, corresponding to the first bytes of three types of pointer data units-short and medium length pointer indexes and full length pointers, being, for example, one, two and three bytes in length, respectively. Each short or medium length pointer index is actually an offset used to access a table entry at which the full length pointer to the transition unit to be accessed is stored, while each full length pointer provides the pointer itself, and may be more than three bytes in length if necessary to address all locations used. To provide a substantial number of the short length pointer indexes, it is preferable that they be allocated most of the pointer data unit byte values. In the example shown, all but eight byte values are allocated to short pointer indexes, with six of those remaining eight allocated to the first bytes of medium length pointer indexes and two allocated to the first bytes of full length pointers. This arrangement is somewhat arbitrary, however, and other divisions of the byte values might be appropriate. In Fig. 4, the first block of byte values is allocated to short length pointer indexes; the next six byte values to midsize or medium length pointer indexes; and the last two byte values to long or full length pointers.

In the byte map of Fig. 4 it is assumed that the labels may take any one of N distinct values, and for English alphabetical characters, N will be an integer greater than 26 so that it can include characters such as the hyphen and apostrophe. Each such extra character could be encoded as a single escape character in combination with an ordinary alphabetic character. This would keep N small, leaving more byte values for use as pointer data units. For each of the six possible combinations of the final, alternative and EOB bits, a block of N values will be allocated as shown. In the byte map of Fig. 4, the bits which have a value of one in each block are shown in that block, but the particular arrangement of the blocks in Fig. 4 is somewhat arbitrary, and the blocks could be ordered in a number of other arrangements.

As noted above, two combinations, in which the final bit is zero and the EOB bit is one, cannot occur unless the FSM data structure includes a failure state, so that the use of only six out of the eight possible combinations of bit values depends on having a data structure without failure states. In effect, the failure state is reached whenever a received string cannot be matched by a series of transitions in the data structure, the last of which has a final bit of one.

Table I shows another way a byte value space can be allocated. Table I allocates eight

**TABLE I**

| **Byte Values** | **Interpretation** |
|---|---|
| 0 | EOB Byte |
| 1 to 255 - (4N + P₁ + P₂) | Short Pointer |
| 256 - (4N + P₁ + P₂) to 255 - (4N + P₁) | Midsize Pointer |
| 256 - (4N + P₁) to 255 - 4N | Long Pointer |
| 256 - 4N to 251 | Characters |
| 252-255 | Table Label Types I-IV |

bit byte values in a way similar to that shown in Fig. 4, within a range from 0 to 255. N is the number of distinct labels, explained in more detail below. P₁ is the number of long pointer byte codes, and P₂ is the number of midsize pointer byte codes. As can be seen in Table I, the number of short pointer byte codes is 255-(4N+P₁+P₂).

The byte value allocation of Fig. 4 differs from that of Table I in several ways. In Fig. 4, blocks of byte values are allocated to characters of six different types, each type being some combination of final, alternative, and EOB, meaning end of branch. In Table I, however, a special EOB byte is allocated the value zero, and can follow any byte that represents an end of branch. If this byte is treated as a short pointer byte, it can point to a data unit that is not final and that begins a subsequence that cycles back to itself, ensuring that a final data unit cannot be reached after the EOB byte.

As a result of the EOB byte, each character has only four different types, the character's four possible combinations of final, also referred to herein as acceptable, and alternative, also referred to herein as alt. Having only four types of characters is advantageous because the type of each character can be represented by two bits, which can be masked for comparison, avoiding the need to do a table lookup or other complicated decoding of a byte value. Therefore, rather than allocating blocks as in Fig. 4, Table I allocates four consecutive byte values to each of N-1 characters.

Another difference is that Table I allocates four consecutive byte values to a table label, which is not interpreted as a pointer or a character, but rather indicates that the next bytes are a pointer to a table. Table labels are an optional technique that can be used to reduce the time necessary to search string set data produced from an FSM in cases where a state in the FSM has a large number of outgoing transitions. Table labels have been found to be advantageous where an FSM transducer summarizes general rules, where an FSM permits compounding of acceptable strings, or where an FSM is used to classify strings that may be composites of acceptable strings and other elements such as punctuation marks. States in such situations often resemble the FSM's start state, which has a large number of outgoing transitions.

Each table can be implemented with N-1 entries, one for each character, so that there is one entry for each of the other label values, i.e. the character bytes; because the table label has the highest label value, the table need not have an entry for the table label itself. The entries are of equal length, so that the entry for a given label value can be accessed by multiplying the label value by the entry length to obtain an offset into the table.

Each entry begins with a label byte. If a label value can be matched from the location preceding the table label, the label value's entry has a label byte with the same label value. But if the label value cannot be matched from the location preceding the table label, the label value's entry has a label byte with a different label value; for example, a table label byte could be used as the label byte for each entry that cannot be matched, since its label value is different than the label value of any of the entries.

Each entry also includes a pointer field following the label byte, and the pointer field is large enough to hold a full length pointer. Each full length pointer can, for example, be three bytes, so that the entry length is four bytes. If a label value can be matched from the location preceding the table label, the pointer field of the label value's table entry contains a pointer to the next subsequence for the label or the special EOB byte if there is no next subsequence.

A table as described above can be shared by a state for which some of the table's entries are inappropriate. This can be done if the outgoing transitions for each state are ordered so that the table label is always the last transition. Preceding outgoing transitions can be used to provide information for transitions for which the table entry is inappropriate.
In general, the choice of which states should be followed by table labels involves a complex time-space tradeoff that may depend heavily on the specific data and task. The use of more tables improves search speed, but may increase the space needed to store the string set data, which include the tables. In certain situations, tables produce dramatic speed improvement, and also reduce the overall space because a large number of states may share a given table.
The first byte value for characters is 256 - 4N, an integer multiple of 4. Therefore, the two low order bits of each character byte can be masked to obtain six high order bits identifying the character.

The character bytes can include an escape code. The escape code plus another byte that follows it in the string set data can be used to encode characters if the total number of characters is greater than N-1, which is likely to be the case if N is chosen to optimize the number of pointers of each size.

The basic features of encoding illustrated in Figs. 1-4 and Table I can be applied in many ways, and an example of an encoding method which includes some of those features is set forth below.

### B. Encoding Methods

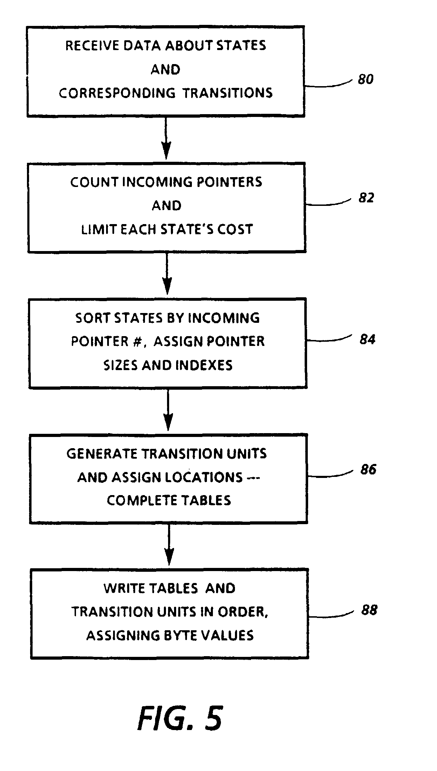

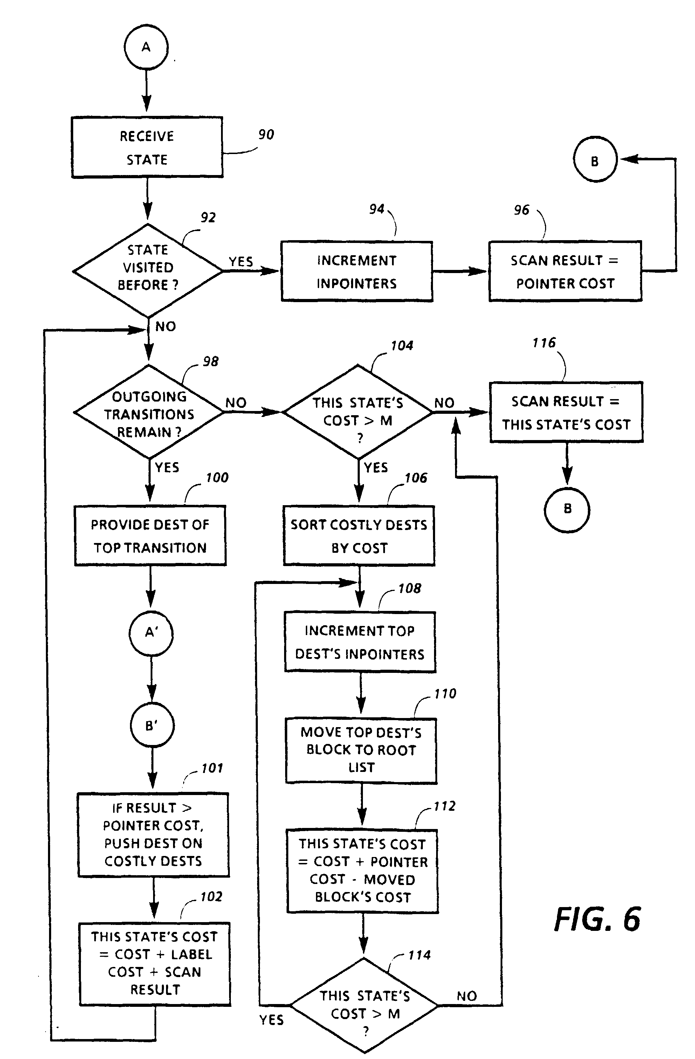

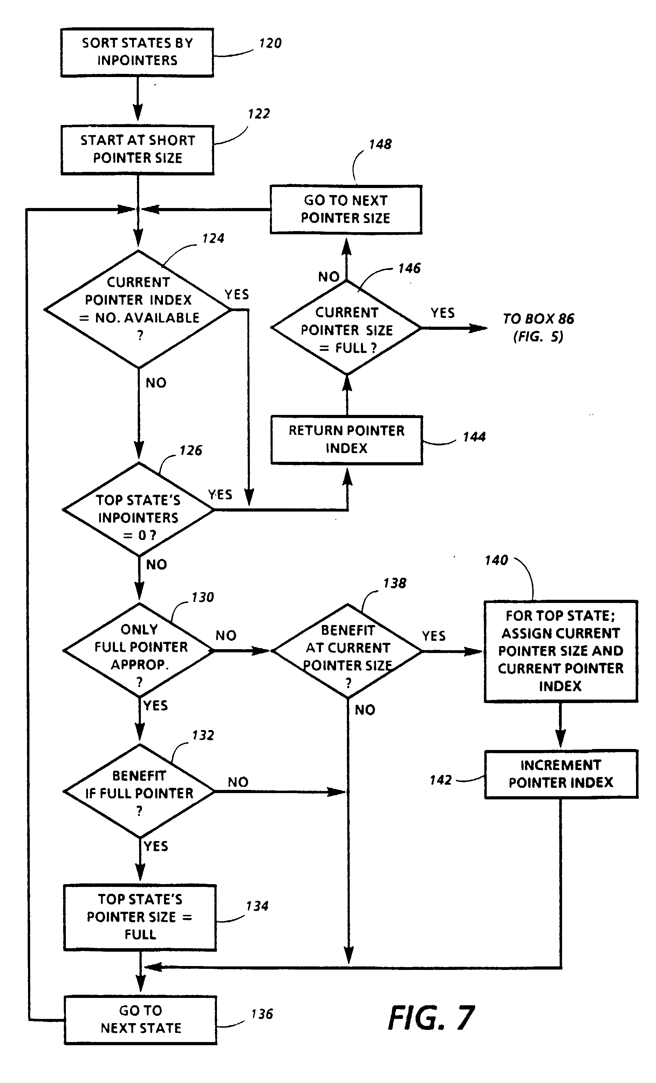

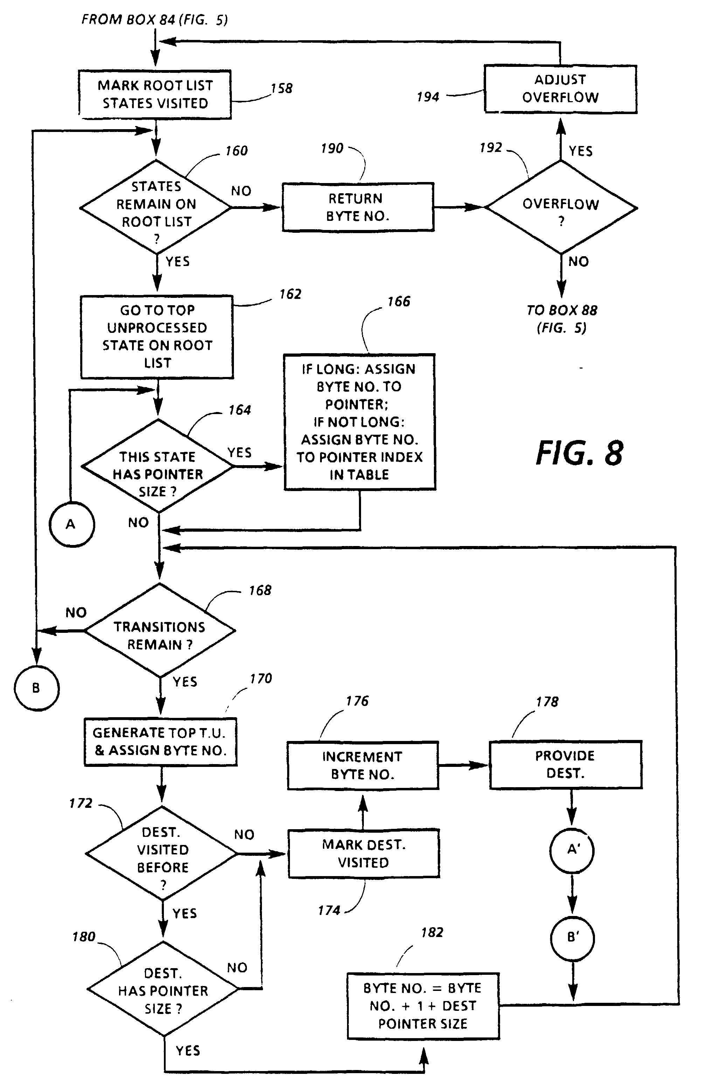

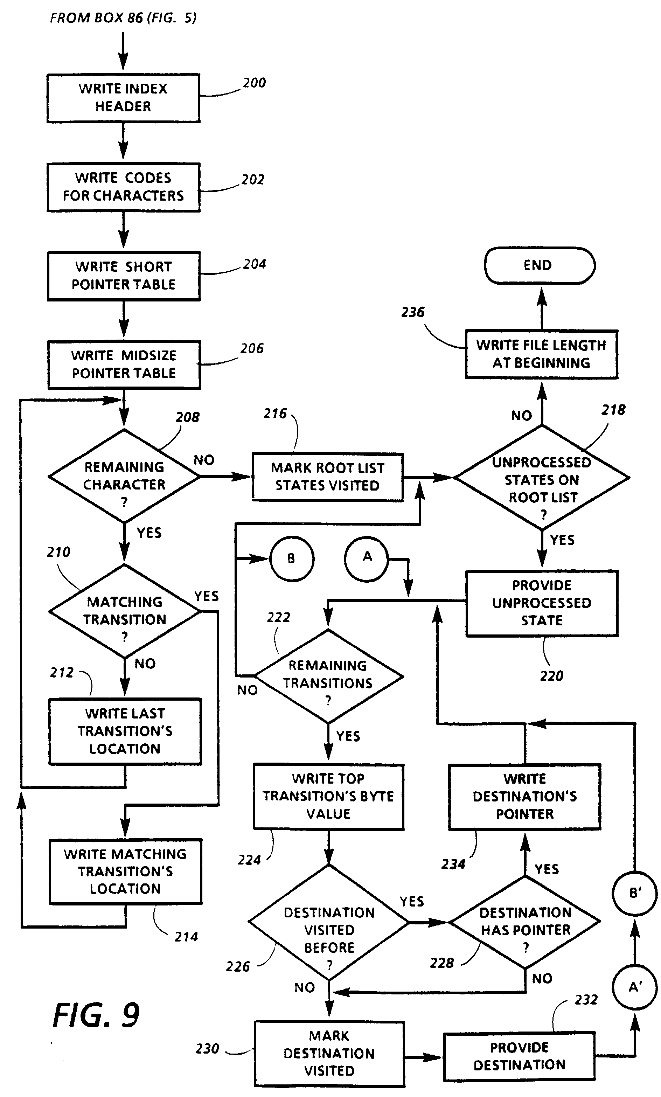

Since FSM data structures are conventionally encoded with units of data corresponding to the states of the data structure, a complete process of encoding an FSM data structure ordinarily includes both generating transition units from these conventional state units and ordering the transition units appropriately. In addition, the encoding process may include steps whose effect is to compress the encoded FSM data structure. Fig. 5 is a flowchart illustrating encoding in which the steps effecting compression occur at several points during the generation and ordering of the transition units. Figs. 6-9 are more detailed flowcharts of parts of the encoding in Fig. 5.

The encoding in Fig. 5 begins by receiving a body of data including data about states and data about the corresponding outgoing transitions of those states, as shown in box 80. An example of such a body of data would be the FSM data structure corresponding to a set of strings. The data about each state will typically include a listing of the transitions leading from that state and an indication of whether that state is the end of one or more strings in the set. The data about each transition will include its label and an indication of the state which is its destination.
The data about each state which determines the order of related transition units must then be obtained in box 82. The transition units, as discussed above, are ordered into a sequence which can reduce the need for pointers in the encoded data structure, because the first and alternative outgoing transitions can be reached by movements through the sequence. Pointers remain necessary, however, if the data structure includes a transition which loops to a preceding state. Pointers also remain desirable, as discussed in greater detail below, where a state has more than one incoming transition, so that the transitions depending from that state need be stored only once, and where an extremely long block of transition units may be broken down into subblocks using pointers, so that the movements through the sequence will not be unduly slow. In order to allocate pointers of different lengths efficiently, it is useful to count the incoming pointers to each state, as shown in box 82. Box 82 also shows that the cost of each state, meaning the number of bytes which the block of transition units dependent on that state will occupy in the encoded file, is limited by breaking off subblocks.

As noted above, a pointer will be assigned to the block of transition units which follows each state having more than one incoming transitions, provided that the pointer is shorter than the block of transition units to which it points. In order to identify such states, the count of incoming pointers to each state may, for example, be incremented for each of that state's incoming transitions after the first. Pointers will also be assigned to subblocks which have been moved out of lengthy blocks of transition units in order to limit a state's cost in terms of the length of the block of transition units which will follow it in the encoded data structure, which will govern the time necessary to pass through that state on the way to an alternative transition unit. A count will also be kept of the incoming pointers to the state preceding each such subblock. Box 84 shows that the states are sorted according to the number of incoming pointers, and a pointer size and a pointer or index of that size are then assigned to the first outgoing transition unit of a state having incoming pointers and whose dependent block of transition units is longer than the pointer size. The shortest pointer indexes are assigned to the states with the most incoming pointers, and so forth, until all the pointer indexes are assigned, and then the full length pointers are assigned.

Once the pointer indexes and pointers are assigned, the transition units are generated and locations are assigned to the transition units, as shown in box 86. One way of doing so is to take the data from a state unit about each outgoing transition which leads ultimately to a final state and expand it to include a field into which a location can be placed. Transitions which do not lead ultimately to a final state can be omitted. When the locations are assigned, it becomes possible to complete the pointer tables from which each actual memory location can be obtained using the corresponding pointer index. In addition, during this step a table can be made up containing the locations of the transition units from the start state, to increase the speed of access.

Also, for any other state having a large number of outgoing transitions, a similar table could be made up and included, for example, with the first outgoing transition from that state to increase access speed. If indexes are used as the tables, with each bit indicating whether a corresponding character has a transition from a specific state, a saving in space may actually be realized for states with many outgoing transitions, since it will not be necessary to store the labels of the outgoing transitions separately from the table. To indicate use of a table, one byte value from Fig. 4 could be reserved to indicate that the next following series of bytes are a character table of a predetermined length. The value of a received character could be added to the present address to find the bit indicating whether that character has a transition leading ultimately to a final state. In general, however, the use of tables may be advantageous for states with many outgoing transitions because it replaces the character bytes for those transitions with a fixed number of bits.

In box 88, the tables and transition units are written to a file in order according to their locations. A byte value is assigned to each transition unit based on its label and on whether it has an alternative, is final, or is the end of a branch, as discussed above. Before the byte values are written, however, it will be appropriate to provide a table for converting the received characters to values corresponding to the values of the labels in the transition units. Then, a number of locations in the file are used for storing the initial transition or first character table and the pointer tables. Finally, the sequence of transition units and pointers themselves may be put into the file. At this point, the file is complete, and can be put into use in the manner discussed below.

The details of the steps in Fig. 5 can be better understood from Figs. 6-9, which are flowcharts of more specific implementations of the steps in Fig 5. Fig. 6 shows in greater detail how the data about the states is obtained in box 82. Fig. 7 shows in greater detail how the pointers are assigned in box 84. Fig. 8 shows how locations are assigned in box 86. Fig. 9 shows how the file is written in box 88.

The flowchart of Fig. 6 begins with the calling of the subroutine, and the call includes the identification of the state currently being scanned, as shown in box 90. In box 92, a test is performed to check whether the state has been visited before by the subroutine. If so, it has already been scanned and it need not be scanned again since, as described below, the scanning process recursively scans all states which depend on the scanned state in preparation for storing them. Therefore, the block of transition units depending on a previously scanned state need not be stored again, but can be replaced by a pointer to the previously scanned block of transitions. In box 94, InPointers, the number of incoming pointers to that state, is incremented for the pointer which will be used. Then, in box 96, the scan result is set equal to a value Pointer Cost which is an estimate of the size of a pointer index, and this scan result is then returned to the routine within which the routine of Fig. 6 was called.

Similarly, in box 98, a test is performed on a state which has not been visited before to check whether the state has any remaining outgoing transitions. If so, the destinations to which those transitions lead are scanned. The outgoing transitions will be in an order, either arbitrarily or as the result of a sort preceding the encoding process, and in box 100 the destination of the top unscanned transition will be provided in a recursive call to the beginning of the routine shown in Fig. 6, shown as A' to distinguish it from the beginning A of the routine within which it is called. When the recursively called routine is completed, it will return its scan result at B', again distinguished from the return B of the routine within which it is called.

Upon completion of the recursively called routine, a test is made in box 101 to determine whether the cost of the destination exceeds Pointer Cost. If so, information for this destination will not normally be reached via a pointer from the current state. If the current state's total cost exceeds a value M which is the maximum cost permitted, however, moving this destination to a remote location and only including a pointer to it within the current state's block may reduce the excess cost. The destination is therefore placed on a list called costlyDests for later consideration. Then the cost of the state from which the outgoing transition led is increased by the cost of a transition unit with a label plus the returned scan result, in box 102. The scan result, of course, is the cost of the destination of the outgoing transition. The cost of a transition unit with a label will typically be one. Then the routine returns to box 98 to test whether further outgoing transitions of the same state remain for scanning.

Because an FSM data structure has only one start state, the recursive routine of Fig. 6 results in the scanning of the entire data structure, beginning with the start state. As each of the outgoing transitions of the start state is scanned, the entire branch of the data structure which depends from that transition is scanned. Therefore, when all the outgoing transitions of the start state have been scanned, the entire data structure has been scanned, all as a result of the recursion contained within the loop including boxes 98-102.

When the outgoing transitions of a state have all been scanned, the cost of the state is tested to determine whether it exceeds a value M which is the maximum cost permitted, in box 104. This maximum cost may be somewhat arbitrary, and serves to limit the time spent passing through the branch depending from a state in order to reach an alternative outgoing transition. The time is reduced because blocks are removed from the branch and replaced with pointers to their locations. These pointers are then skipped when the alternative of the branch is being obtained. If time did not matter at all, and the primary concern were the amount of memory needed to store the data structure, the test in box 104 would be unnecessary.

If the state's cost exceeds M, the costly destinations from that state, as determined in box 101, are sorted according to their respective costs, in box 106. Then a loop begins with box 108 in which the InPointers value of the most costly destination from costlyDests is incremented. Then, in box 110, the block beginning with that most costly destination and including the transitions and states depending from it is moved to Root List. Root List is a list of blocks which will always be accessed by pointers; in other words, each block in Root List begins with a transition unit which will not be located immediately after any of the transition units leading to it. Root List may have as its last element the block beginning with the start state, and the other blocks may be pushed onto the front of the list as they are encountered in this scan of the FSM data structure. Other arrangements of the blocks in Root List could be used, since their relative positions are arbitrary, and the start state could be pushed onto the Root List last.

In box 112, the cost of the present state is increased by the value Pointer Cost, but decreased by the cost of the block moved to Root List. Then, in box 114, the cost is again compared with the value M to determine whether blocks 108-114 should be repeated to bring the state's cost below the maximum.

When the state's cost no longer exceeds the maximum value M, it is returned as the scan result in box 116. This scan result will typically be returned to box 100 of the routine from which the routine of Fig. 6 was recursively called. When the cost being returned is the cost of the start state, however, the scan result will be returned to the overall routine of Fig. 5. In addition to this item of information, the routine of Fig. 6 will have stored the InPointers of the states, permitting the sorting in box 84 of Fig. 5.

Fig. 7 shows in more detail a sequence of steps implementing box 84 of Fig. 5. In box 120, the states of the FSM data structure are sorted according to their respective InPointers values, determined previously, so that states with the highest number of incoming pointers are at the beginning of a sorted list. Then, in box 122, an iterative process of assigning pointer sizes and pointers or pointer indexes to the sorted states begins with the shortest pointer size. The shortest pointer indexes can be one byte long, the midsize pointer indexes two bytes long, and the long pointers a full three byte length. Each size has a corresponding number of available values, which will be pointer index values for short and midsize pointers and pointer values for full length pointers.

The number of available pointer indexes or pointers at the current pointer size is compared in box 124 with the current pointer or pointer index to check whether all pointers or indexes of that size have been assigned. If not, a test is performed, determining in box 126 whether the InPointers value of the state at the top of the sorted states is zero.

If the InPointers value is still greater than zero, a test in box 130 determines whether, under the current conditions, a full three byte pointer is necessarily the only appropriate pointer size. This can be true not only if the other pointers have been exhausted, but also if the number of InPointers is only one or if the number of InPointers is two and the current pointer size is two. In these latter cases, a shorter pointer size will not be beneficial because, when the number of InPointers is small, the space occupied by the pointer index plus the entry in the pointer table may exceed the space occupied by a full length pointer.

If only a full length pointer could be appropriate, a test is performed in box 132 to determine if a full length pointer would be beneficial in terms of reducing memory space used. This may be done by first testing whether the cost of the present state is greater than or equal to the current pointer size, so that the pointer will not cost more space than the present state. For a pointer size equal to three, a further test can determine whether a pointer is nonetheless beneficial because the present state's cost is three or because the present state's cost is two, the destination of its first transition has a cost of at least two and the current pointer size of the destination is not one. Since the pointer size of the destination is not one, it is either nil, meaning that only a pointer size of two or greater could be assigned, or it is already at least two, so that the actual cost of the present state is three or more, making a pointer beneficial. If a full length pointer would be beneficial, a full length pointer size is assigned to the top state on the sorted list in box 134. After box 134 or if the test in box 132 has a negative result, the routine proceeds to the next sorted state in box 136, returning to begin another iteration at box 124 with the next state as the top state.

If the test in box 130 has a negative result, a test in box 138 determines whether a pointer of the current pointer size would be beneficial, which will be true if the cost of the present state is greater than the current pointer size. Also, if the current pointer size is two, the same test described above for full length pointers can be performed, determining if a pointer of midsize length would be beneficial. If so, the top state is assigned the current pointer size and the current pointer index in box 140. The pointer index is then incremented in box 142, and the routine proceeds to the next state in box 136. If the test in box 138 has a negative result, however, the routine immediately proceeds to the next state in box 136.

The iterations will continue until one of the tests in boxes 124 and 126 has an affirmative result. Then, in box 144, the current pointer index will be returned as the number of pointers of that size which have been assigned. This value may be less than the number of available pointers of that size because pointers are only assigned when beneficial. If the current pointer size is not the longest pointer size, as determined in box 146, the routine proceeds to the next pointer size in box 148, and then returns to box 124. If the longest pointer size has been completed, however, the routine proceeds to the functions in box 86 of Fig. 5, which may be implemented as shown in Fig. 8.

The functions of Fig. 8 may be entered from box 84 in Fig. 5. The first step, in box 158, is to mark the states of the Root List as visited, ensuring that a pointer will be assigned whenever one of those states is visited during this scan. If the Root List has any unprocessed states on it, as tested in box 160, one of the unprocessed states is provided in box 162, and in box 164, the state provided is checked to see if it has a pointer size. If so, the Byte Number, which represents the currently assigned location of a byte in the overall sequence of transition units, is assigned according to the pointer size in box 166. If the pointer size is long, meaning that a full length pointer will be used, the Byte Number is assigned as the value of the full length pointer. Otherwise, the Byte Number is assigned to the position in the appropriate pointer table corresponding to the pointer index assigned to that state. Ordinarily, a state unit of data will not be included in the encoded FSM data structure, so that the Byte Number need not be assigned to the state itself, but only to its first outgoing transition unit. Therefore, the assignment of Byte Numbers in box 166 serves solely to provide pointers to first outgoing transition units where appropriate.

If box 164 has a negative result or when the assignment of the Byte Number in box 166 is completed, values of the Byte Number are assigned to transition units depending from the present state. This begins with a test in box 168 to see whether any of the outgoing transitions from that state remain to have transition units generated and values assigned. If so, a transition unit is generated for the top one of the remaining transitions andthe current Byte Number is assigned to it in box 170. Then, the destination of that transition is checked in box 172 for an indication that it has been previously visited during the present iteration through the pointer list. On the first visit to the destination, the result will be negative, and the destination is marked in box 174 with an indication that it has been visited on this iteration. The Byte Number is then incremented in box 176, and the destination is provided in box 178 to begin a recursive call of a part of the routine in Fig. 8. This recursive call begins at A', to be distinguished from the position A at which a calling routine would enter the routine of Fig. 8. Similarly, the recursive call ends at B', distinguished from position B at which a calling routine would exit the routine of Fig. 8. Therefore, the only part of Fig. 8 which is called recursively is the part including boxes 164-182. After a recursive call is completed, another test for remaining transitions is performed in box 168.

If box 172 yields an affirmative result, indicating that the destination has been visited before, another test in box 180 determines whether the destination has a pointer size assigned to it. If not, the transition units depending from the destination are so few that a pointer would not be beneficial, and the same recursion is performed on the destination, through boxes 174-178. Note, however, that the marking of the destination as visited in box 174 is unnecessary in this case, and is only done to simplify programming. If, on the other hand, the destination has a pointer size, a pointer or index will be inserted into the encoded data structure after the current transition unit, pointing to the first outgoing transition from the destination. Therefore, before assigning a Byte Number value to the next transition unit, it is necessary to increase the Byte Number by one plus the pointer size of the destination in box 182.

The functions in boxes 160-182 will be iteratively performed until the states on the Root List have all been assigned Byte Number values. At that point, the test of box 160 will yield a negative result, and the current Byte Number will be returned in box 190. A test in box 192 then determines whether the total number of bytes is greater than the number which can be stored within a space addressable by the current pointer table entry size. If, for example, two byte table entries are being used, or 16 bits, 65,535 bytes will be addressable. The encoding technique is equally applicable to larger data structures. In such cases, three byte table entries could be used, and more of the byte values from the space of Fig. 4 could be used for the first bytes of full length pointers.
If box 192 determines that the total number of bytes exceeds the addressable bytes, an overflow will occur because the pointer table entries may be inadequate to store the addresses of some transition units to which they point. This overflow may be adjusted in box 194 by an appropriate technique such as increasing the size of the table fields, or, where that would be inefficient, by changing the affected pointers to full length pointers, and leaving the corresponding entries in the pointer tables blank. Since this may affect the locations of other bytes within the overall sequence, however, it is necessary to perform another iteration of the functions in boxes 160-182, but with a visit mark distinct from that used previously. When the overflow has been corrected and the Byte Number values have again been assigned, a negative result will occur in box 192, and the routine will proceed to box 88 in Fig. 5, which may be implemented as shown in Fig. 9.

The functions of Fig. 9 may be entered from box 86 in Fig. 5, as shown, and will write the encoded FSM data structure to a file. First, in box 200, an index header is written containing values necessary during lookup. These values may include a flag to indicate whether the start state is final; the size of the alphabet N; the size of the pointer table entries; the byte values in the byte value map at which the respective types of pointer data units begin; the byte value in the byte value map at which the label bytes begin (256-6N); and the starting locations of each of the tables or blocks of data in the file itself. Then, in box 202, the codes for the characters are written, and will typically be ASCII codes. These codes provide a table which may be used to convert received characters into the values which represent them in the encoded data structure. The next steps are to write the short pointer table in box 204 and the midsize pointer table in box 206, in each case a series of pointers.

The characters of the alphabet are then provided in sequence and iteratively assigned a value in boxes 208-214, resulting in a table of locations for the outgoing transitions of the start state. The value assigned to each character is the location of the first outgoing transition unit from the start state which has a label matching that character. After testing whether a character remains to have a value assigned in box 208, a test is performed in box 210 to determine whether any of the transition units from the start state has a label matching the next of the remaining characters. If not, a standard value will be written in box 212 which will be the location of the last outgoing transition unit from the start state, because this transition unit will be certain to provide a mismatch, the correct result, but will have no alternatives, so that no further comparisons will be made after the mismatch is detected. If a character does have a matching outgoing transition unit, the location of that matching transition unit will be written in box 214. In either case, the test in box 208 for a remaining character is then repeated. The iterative subroutine of boxes 208-214 permits more rapid entry to the outgoing transitions of the start state, and a similar subroutine could be used for speedier access to the outgoing transitions of any other state in the FSM data structure which, rather than having sparse outgoing transitions, has a large number, many of which have large blocks of dependent transition units. This special case could be indicated by allocating one distinctive code byte value for this purpose. When the test in box 208 yields a negative result, the table of first character locations is complete.

As in Fig. 8, the states on the Root List are first marked in box 216 as having been visited on this scan, ensuring that a pointer will be assigned whenever one of those states is visited during this scan. The writing of the transition units of the encoded FSM data structure then occurs in an iterative subroutine including boxes 218-234. A test in box 218 determines whether any unprocessed states remain on the Root List. As discussed above, each of the transition units of the FSM data structure will be within one of the blocks depending from a state on the Root List, with the start state being necessarily included on the Root List. Therefore, by proceeding through the Root List, all the transition units of the encoded FSM data structure will be processed and written out appropriately. When the last has been written, box 218 will have a negative result. In that event, the length of the entire file will then be written into the first location in the file in box 236, before ending the routine.

An unprocessed state from the Root List is provided in box 220 if the test in box 218 has an affirmative result. Then, in box 222, that state is tested for remaining outgoing transitions. If it has none, the test in box 218 is repeated without writing anything, so that the encoded FSM data structure is written without any state unit or other discrete unit of data relating to a state with no outgoing transitions. All of the necessary information about such a state is contained in the transition units leading to it.

If the state has remaining outgoing transitions, a further iterative subroutine proceeds to write appropriate data, beginning with the byte value of the first or top transition unit in box 224. This byte value is based on a byte value map like that of Fig. 4, and the value of the character which is the label of that transition unit is added to the first byte value in the appropriate block of byte values to arrive at the byte value to be written. Which block is appropriate depends on the values of the alternative, final, and EOB bits, as discussed above.

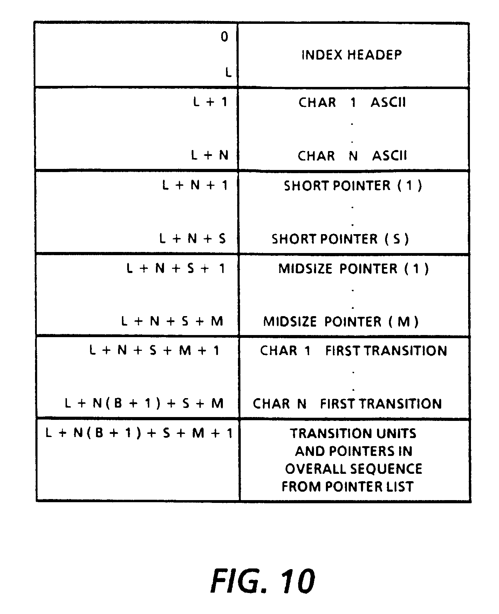

When the byte value of a transition unit has been written, a test in box 226 determines whether the destination of that transition unit has been visited before on this scan. If so, a further test in box 228 determines whether the destination has a pointer to it. If either of these tests yields a negative result, the destination is marked as visited in box 230 and is provided in a recursive call in box 232. This call enters the recursively called routine at A', corresponding to the position A in the routine of Fig. 9. It exits the recursively called routine at B', corresponding to the position B in Fig. 9. Therefore, the recursively called routine includes only the iterative subroutine of boxes 222-234. As in other scans discussed above, the effect of the recursive call will be to write the byte values and pointers of an entire block of the FSM data structure depending from a state on the Root List.
If the tests in boxes 226 and 228 both yield affirmative results, the destination has already been visited and has a pointer, so that it is only necessary to write the destination's pointer in box 234 before returning to box 220. In this case, no recursive call of the routine will be necessary.
Upon completion of the routine of Fig. 9, the file containing the encoded FSM data structure will have contents as shown in Fig. 10. The length of the entire file appears at the first byte location, designated 0. The index header of length L appears in byte locations 1 through L. Then, the ASCII codes corresponding to the characters in sequence appear at byte locations L+1 through L+N. The short pointer table of length S then appears, beginning at byte location L+N+1. The midsize pointer table of length M appears next, beginning at byte location L+N+S+1. The locations of the first transitions from the start state for each character will then be stored, each of length B, beginning at byte location L+N+S+M+1. Finally, the transition units and pointers in the overall sequence according to the pointer list will begin at byte location (L+N(B+1)+S+M+1) and continuing to the end of the file.

The file shown in Fig. 10 may be stored in any appropriate form, including storage on a ROM or on a portable memory medium such as a diskette. When it is used for evaluation of a received character string, a relatively straightforward series of steps, as set forth below, is followed.

### C. Using the Product

The encoding technique, as set forth above, determines to a large extent the manner in which the encoded FSM data structure may be used. One specific task in which an encoded FSM data structure is commonly used is the checking or evaluation of a received character string to determine whether it is in the set of strings covered by the FSM. In essence, the FSM data structure is used to look up the received string, and an appropriate signal is provided indicating whether the received string is found.

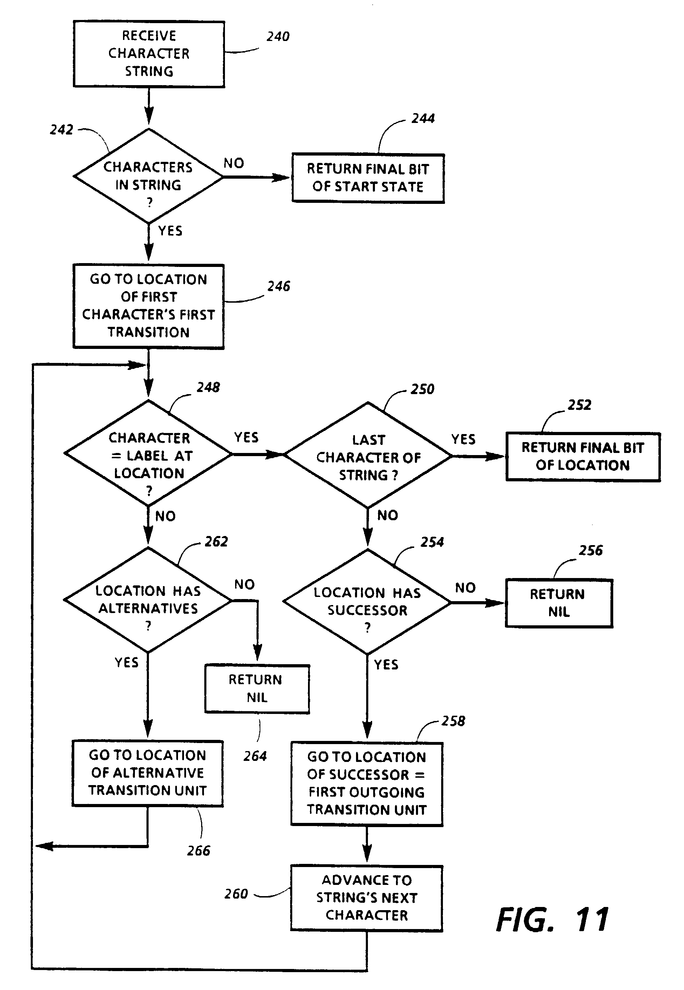

Fig. 11 is a flowchart showing a lookup method suitable for an encoded FSM data structure like that shown in Fig. 10.

The character string to be looked up in the encoded FSM data structure is received in box 240. A preliminary test in box 242 determines whether the string has any characters, and returns the value of the final bit of the start state in box 244 if there are none, which will indicate whether the FSM data structure accepts the null string. As noted above, the final bit of the start state may be stored in the index header of the file, making this step possible. If, however, the string has at least one character, the routine moves in box 246 to the location specified in the first character lookup table for the first character of the string. This may be done by converting the character from ASCII to the corresponding value in the data structure and then accessing the entry in the first character table corresponding to that value to obtain the location of the transition unit from the start state corresponding to the character. The table entry will be an offset which is added to the location of the first encoded transition unit in the data structure to obtain the actual location of the transition unit sought.
An iterative subroutine then begins with a test at box 248 of whether the character is equal to the label of the transition unit at the current location. If so, the character matches. For the first iteration, a match should ordinarily occur, since the location was obtained by using the character, but for a character which has no outgoing transition from the start state, a match will not occur, because, as noted above, the table entry in the first character table will be the location of a transition unit which is certain not to match.

If a match occurs in box 248, a further test in box 250 determines whether the character is the last of the string, which may be done by comparing the number of the character with the number of characters in the string. If so, all of the characters of the string have matched with labels from transition units, and the only remaining question is whether the last transition unit was final. Therefore, the final bit value of the transition unit in the current location is returned in box 252, indicating by its value whether the string received was in the set covered by the encoded data structure.

If the character which matched is not the last of the received string, a test in box 254 determines whether the current location has a successor, meaning that its destination has at least one outgoing transition unit. If there is a successor, the routine advances to it, that is, to the first outgoing transition unit's location, in box 258. The test in box 254 may begin by checking the EOB bit of the byte value at the current location. If it is a zero, there is a successor, and it may be reached by advancing to the next location in the data structure. If the value there is a pointer, however, the routine will go to the location indicated by the pointer, either directly if a full length pointer or by obtaining the location by entering the appropriate pointer table if a short or midsize pointer index. Note that the appropriate action can be determined from the value stored at the next location, which will be a value either in the label portion or the pointer portion of the byte map of Fig. 4. It is also necessary to advance to the next character in the received string, in box 260, before returning to the test in box 248. If the current location has no successor, nil is returned in box 256, because the further characters of the string cannot be matched, since the current state has no outgoing transitions.

When a mismatch occurs in box 248, the routine must determine whether the transition unit at the current location has an alternative outgoing transition unit, in box 262. This may be done by testing the alternative bit of the current transition unit. As with the final bit and the EOB bit, mentioned above, this test can be done simply by testing the byte value of the transition unit to determine which of the blocks of labels in Fig. 4 includes it. If the transition unit has no alternative, nil is returned in box 264.

If there is an alternative, the routine goes to the location of the alternative in box 266. The routine may move by advancing one location at a time through the data structure, incrementing a counter for each alternative bit encountered and decrementing the counter for each EOB bit encountered, until the counter reaches a value of zero. Any pointers encountered while advancing through the data structure will be skipped over, but the counter will be decremented. This is because the number of alternative bits must be one less than the number of EOB bits within any block pointed to, so that it is necessary to decrement the counter by one, but not to advance through the block of transition units pointed to by the pointer. When the counter finally reaches zero, meaning that the numbers of alternative bits and EOB bits balance, one more step through the data structure will bring the lookup routine to the location of the alternative or to a pointer or index to the alternative. As for locating a successor after a match, above, the byte value at the next location is tested to determine whether it contains a label or is a pointer data unit, leading to the location of an alternative which is shared with another state. Upon reaching the alternative's location, the routine returns to the test of box 248.

### D. Types of FSM Data Structures

The encoding technique of Figs. 5-10 will accommodate a number of other variations in an FSM data structure, in addition to the simple deterministic loop-free data structure of Fig. 1 in which each transition is labeled with a single alphabetic character. In some cases, these variations will require a modification of the lookup method, however, due to the changed FSM data structure.

The specific encoding technique of Figs. 5-10 can, for example, be used with non-deterministic FSM data structures. For non-deterministic data structures, however, the lookup method of Fig. 11 must be modified to permit checking of all outgoing transitions of a state to pick up all the matches, since a state in a non-deterministic data structure may have more than one outgoing transition with a single label. The lookup method could, for example, keep track of the locations at which matching outgoing transitions were encountered, and return to each such transition for alternative matching of the subsequent characters of the received string.
The specific encoding technique of Figs. 5-10 could also be used with data structures containing loops. The inclusion of loops in the FSM data structure permits the coverage of an infinite set of strings. Looping may, for example, be used in an FSM data structure covering a number of substrings, such as prefixes, which may occur in any order, provided that pointers are properly assigned. The encoding needs no changes, since states reached in a loop will necessarily have pointers assigned. As long as pointers are properly assigned, the lookup method of Fig. 11 should work for a looping data structure.

Some non-deterministic FSM data structures include a special type of transition, called an epsilon or empty transition, which permits an advance through the data structure without advancing to the next element in a received string. Epsilon transitions may be used to reduce the size of an FSM data structure where a number of states have different groups of outgoing transitions, but each group of outgoing transitions shares a common subset with the others. The common subset may then be stored in the appropriate location for one of the states, but the other states may each have an epsilon outgoing transition leading to that common subset. Epsilon transitions could also be used for other purposes, as discussed below.

The use of epsilon transitions requires a few modifications of the encoding technique. For example, the set of characters must include at least one distinct character for the epsilon transition. Rather than treating each epsilon character as an ordinary character, however, it may be appropriate to give it a unique byte value. Therefore, more than one epsilon character, each with a unique byte value, may be required, one with each possible combination of alternative and EOB bits. Note, however, that an epsilon character will be unnecessary in many cases if the epsilon transition is always the last outgoing transition from a state, because the epsilon transition can be encoded simply as a pointer to the first outgoing transition of its destination. In general, the lookup method will keep track of the location whenever an epsilon transition is encountered, but no attempt will be made to match its label, and the first outgoing transition of the state to which it leads will be accessed.

A number of other variations revolve around additional information stored within the FSM data structure. For example, the data structure may provide an appropriate output whenever a final state is reached. The appropriate output may be stored in a field of predetermined length immediately after each final transition, so that the lookup method skips over the output if further characters remain in the received string, but provides the output if the last character matches the final transition. In this case, the presence of the outputs might be indicated by a bit in the header of the file, and could also be taken into account in calculating state costs. Another approach would make use of epsilon transitions from the final states, with the epsilon transitions leading to the outputs via pointers. This would be especially useful if the same output occurred after many final transitions. Similarly, indexes or pointers in the FSM could lead to the outputs, without the use of epsilon transitions, but this would also require skipping over the index or pointer if further characters remain in the received string.

Another variation is a data structure in which one block of byte values is used to indicate that a second character follows, so that the transition unit contains a pair of values. For example, one value could be compared with a character in a received string and the other could be output if the comparison has a specified result. Or, two strings could be received, and the characters of one could be compared with one of the values while the characters of the other are compared with the other. In this way, an FSM data structure representing a finite state transducer may be encoded.

In general, the encoding technique is applicable, with appropriate modifications, to any FSM data structure and may also be applicable to a non-FSM data structure.

### E. Encoding and Lookup Apparatus

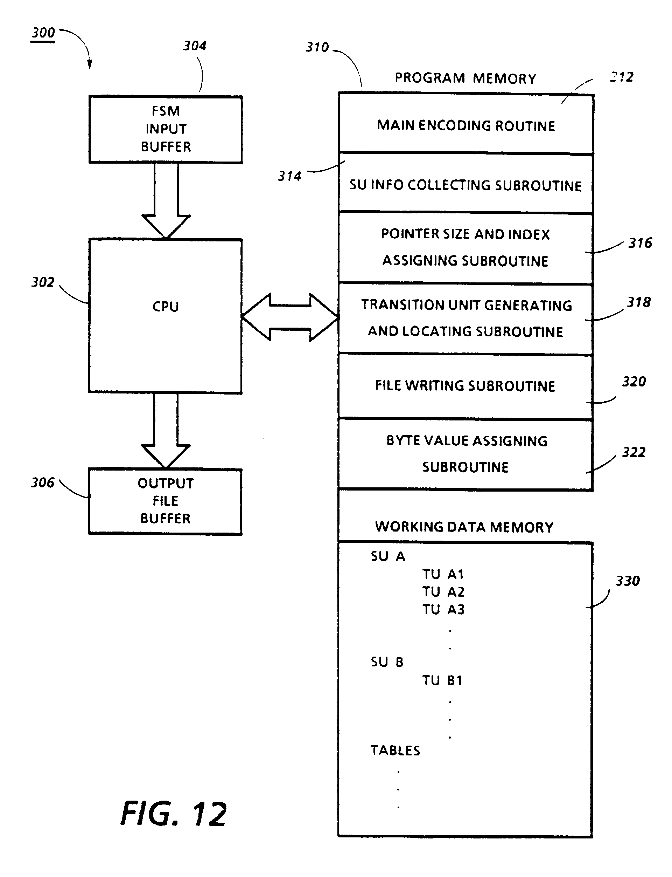

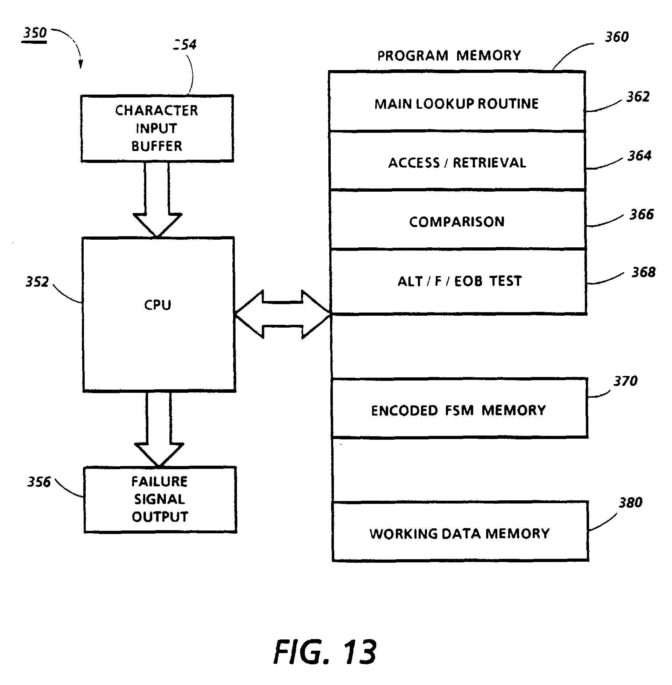

The encoding and lookup techniques can be implemented in appropriate apparatus to perform the functions of encoding an FSM data structure and looking up a string of received elements in the encoded data structure. Fig. 12 shows apparatus for encoding and Fig. 13 shows lookup apparatus.

Encoding apparatus 300, as shown in Fig. 12, is centered around central processing unit (CPU) 302, which may be any data processing system capable of being programmed to perform encoding.

CPU 302 receives the FSM data structure to be encoded from FSM input buffer 304. Buffer 304 is a memory capable of storing the data structure, and if CPU 302 was also used to generate the FSM data structure to be encoded, buffer 304 may simply be a part of the working memory of CPU 302. Similarly, CPU 302 will provide the encoded data structure to output file buffer 306, which may also be a part of the working memory of CPU 302, or may be any other output buffer through which the file may be output for use.

Program memory 310 of CPU 302 stores the program to be executed. Program memory 310 illustratively contains a main encoding routine 312 which calls several subroutines, similarly to the method of Fig. 5. The subroutines shown correspond generally to the functions discussed above in relation to Figs. 6-9. Subroutine 314 collects information about the state units in the FSM data structure, such as the number of incoming pointers and the cost, and can perform the function of limiting the cost of a state. Subroutine 316 assigns pointer sizes and pointer indexes to appropriate states, and may do so according to a sort of the states. Subroutine 318 generates the transition units and assigns locations to them, making it possible to complete the pointer tables. Subroutine 320 writes the file, and may call subroutine 322 to assign a specific byte value to a transition unit according to a byte value map like that of Fig. 4.

During the execution of the program in program memory 310, CPU 302 uses working data memory 330 to store the data structure and other data used to encode it. Working data memory 330 illustratively contains a series of state units (SU), each followed by outgoing transition units (TU) which have been generated from its outgoing transitions, and also a series of tables, such as pointer index tables. When execution of the program has been completed, CPU 302 will have provided the encoded data structure to output file buffer 306.

The lookup apparatus 350 of Fig. 13 resembles the encoding apparatus 300 of Fig. 12 by being centered around a CPU 352. In fact, the same CPU may be used in both apparatus, but programmed differently for the function to be performed. CPU 352 receives the string of characters or other elements to be looked up through character input buffer 354, which may be a conventional input buffer arranged to store a received character string temporarily. Similarly, CPU 352 provides failure signals through failure signal output 356 when it fails to match the received string with the encoded data structure.

In operation, CPU 352 will execute a program stored in program memory 360. Program memory 360 illustratively contains main lookup routine 362, corresponding to the method of Fig. 11, and routine 362 may call several subroutines, examples of which are shown. Subroutine 364 accesses a location in the encoded data structure and retrieves the byte stored at that location. Subroutine 366 compares the label from a retrieved byte with a received character to find a match. Subroutine 368 test a retrieved byte to determine the values of its alternative, final, and EOB bits. Other subroutines could be broken out of the main lookup routine 362 for performing other functions.

While executing the program in program memory 360, CPU 352 will keep the encoded data structure in a part of memory designated the encoded FSM memory 370 in Fig. 13. In addition, for the temporary storage of data during the lookup process, CPU 352 will use its working data memory 380. As long as matches are obtained, CPU 352 may continue to look up each of a series of received strings, providing a failure signal only when it finds a string which does not match and is therefore unacceptable to the FSM.

### F. Miscellaneous

The present invention has a wide variety of applications. Spelling checking is but one application in which the encoded FSM data structure may be used to check a received string against the set of strings covered. Many other applications will be apparent to those skilled in the art, including hyphenation, thesaurus, translation, optical character recognition, and so forth.

## Claims

1. A product for use in a machine that performs a search with a string of characters, comprising:
a storage medium for storing data in machine-accessible form; and
string set data stored by the storage medium; the string set data indicating a set of strings; the string set data comprising a sequence of data items including a first data item; the first data item including;
first item label information indicating at least one of a set of character types and first item search information that can be used in a machine search of the sequence of data items with a string of characters;
the first item search information including;
first item next information indicating whether the first data item has a next data item to which the machine search can continue if a current character in the string matches the first item label information; the next data item being accessible based on the position in the sequence of the first data item; and
first item alternative information indicating whether the first data item has an alternative data item to which the machine search can continue if the current character in the string does not match the first item label information; the alternative data item being accessible based on the position in the sequence of the first data item.

2. The product of claim 1, in which the first data item's next data item immediately follows the first data item in the sequence.

3. The product of any of claims 1 or 2, in which the first data item's alternative data item immediately follows a second data item in the sequence; the first data item beginning a subsequence of data items that ends with the second data item; the second data item not having a next data item; the subsequence including a first number of data items that do not have next data items and a second number of data items that have alternative data items; the first and second numbers being equal.

4. The product of any of the preceding claims, in which the first data item includes only one byte; the one byte including the first item label information and the first item search information.

5. The product of any of the preceding claims, in which the first data item includes first and second bytes; the first byte including the first item label information and the first item alternative information; the second byte including the first item next information; the first item next information indicating that the first data item does not have a next data item.

6. The product of any of the preceding claims, in which the first data item further includes first item final information; the first item final information indicating whether the string of characters is in the set of strings if the last character in the string matches the first item label information.

7. The product of any of the preceding claims, in which the string set data further comprise a pointer data item that includes pointer information indicating the location of the first data item.

8. The product of claim 7, in which the pointer information further indicates a number of following bytes; the pointer data item and the following bytes together indicating the location of the first data item.

9. The product of claims 7 or 8, in which the string set data further comprise a lookup table; the pointer information indicating an entry in the lookup table; the entry indicated by the pointer information including a full length location of the first data item.

10. The product of the preceding claims, in which the set of strings includes words.

11. A system comprising the product of any preceding claim, the system further comprising a processor connected for accessing the string set data.

12. The system of claim 11, further comprising instruction data stored by the storage medium, the instruction data indicating instructions the processor can execute to perform a machine search of the string set data with a string of characters; the processor being connected for accessing the instruction data.

13. A method of searching string set data with a string of characters; the string set data indicating a set of strings; the string set data including a sequence of data items including a first data item; the first data item including:
first item label information indicating at least one of a set of character types and first item search information;
the first item search information including;
first item next information indicating whether the first data item has a next data item; and
first item alternative information indicating whether the first data item has an alternative data item;
the method comprising;
accessing the first data item;
if a current character int he string matches the first item label information and the first item next information indicates that the first data item has a next data item, accessing the next data item based on the position in the sequence of the first data item; and
if a current character in the string does not match the first item label information and the first item alternative information indicates that the first data item has an alternative data item, accessing the alternative data item based on the position in the sequence of the first data item.

## Patentansprüche

1. Gegenstand zur Verwendung in einer Maschine, die eine Suche mit einer Folge von Zeichen durchführt, der aufweist:
ein Speichermedium zum Speichern von Daten in einer maschinen-zugreifbaren Form; und
Folgesatzdaten, die durch das Speichermedium gespeichert sind; wobei die Folgesatzdaten einen Satz von Folgen anzeigen; wobei die Folgesatzdaten eine Sequenz von Datenelementen aufweisen, die ein erstes Datenelement umfassen; wobei das erste Datenelement umfaßt;
Kennungsinformationen für das erste Element, die mindestens einen eines Satzes von Zeichentypen anzeigen und Suchinformationen für das erste Element, die in einer Maschinensuche der Sequenz der Datenelemente mit einer Folge von Zeichen verwendet werden können;
wobei die Suchinformationen für das erste Element umfassen;
nächste Informationen für das erste Element, die anzeigen, ob das erste Datenelement ein nächstes Datenelement besitzt, zu dem die Maschinensuche fortführen kann, wenn ein momentanes Zeichen in der Folge die Kennungsinformationen für das erste Element anpaßt; wobei auf das nächste Datenelement basierend auf der Position in der Sequenz des ersten Datenelements zugreifbar ist; und
alternative Informationen für das erste Element, die anzeigen, ob das erste Datenelement ein alternatives Datenelement besitzt, zu dem die Maschinensuche fortführen kann, wenn das momentane Zeichen in der Folge nicht die Kennungsinformationen des ersten Elements anpaßt; wobei auf das alternative Datenelement basierend auf der Position in der Sequenz des ersten Datenelements zugreifbar ist.

2. Gegenstand nach Anspruch 1, wobei das nächste Datenelement zu dem ersten Datenelement unmittelbar dem ersten Datenelement in der Sequenz folgt.

3. Gegenstand nach einem der Ansprüche 1 oder 2, wobei das alternative Datenelement des ersten Datenelements unmittelbar einem zweiten Datenelement in der Sequenz folgt; wobei das erste Datenelement eine Untersequenz von Datenelementen beginnt, die mit dem zweiten Datenelement endet; wobei das zweite Datenelement kein nächstes Datenelement besitzt; wobei die Untersequenz eine erste Anzahl von Datenelementen umfaßt, die keine nächsten Datenelemente haben, und eine zweite Anzahl von Datenelementen, die alternative Datenelemente haben; wobei die erste und die zweite Anzahl gleich sind.

4. Gegenstand nach einem der vorhergehenden Ansprüche, wobei das erste Datenelement nur ein Byte umfaßt; wobei das eine Byte die Kennungsinformationen des ersten Elements und die Suchinformationen des ersten Elements umfaßt.

5. Gegenstand nach einem der vorhergehenden Ansprüche, wobei das erste Datenelement erste und zweite Bytes umfaßt; wobei das erste Byte die Kennungsinformationen des ersten Elements und die alternativen Informationen des ersten Elements umfaßt; wobei das zweite Byte nächste Informationen des ersten Elements umfaßt; wobei die nächsten Informationen des ersten Elements anzeigen, daß das erste Datenelement kein nächstes Datenelement besitzt.

6. Gegenstand nach einem der vorhergehenden Ansprüche, wobei das erste Datenelement weiterhin End-Informationen des ersten Elements umfaßt; wobei die End-Informationen des ersten Elements anzeigen, ob die Folge von Zeichen der Satz von Folgen ist, wenn das letzte Zeichen in der Folge die Kennungsinformationen des ersten Elements anpaßt.

7. Gegenstand nach einem der vorhergehenden Ansprüche, wobei die Folgesatzdaten weiterhin ein Hinweiszeigerdatenelement aufweisen, das Hinweiszeigerinformationen umfaßt, die die Stelle des ersten Datenelements anzeigen.

8. Gegenstand nach Anspruch 7, wobei die Hinweiszeigerinformationen weiterhin eine Anzahl von folgenden Bytes anzeigen; wobei das Hinweiszeigerdatenelement und die folgenden Bytes zusammen die Stelle des ersten Datenelements anzeigen.

9. Gegenstand nach den Ansprüchen 7 oder 8, wobei die Folgesatzdaten weiterhin eine Durchsichtstabelle aufweisen; wobei die Hinweiszeigerinformationen einen Eintritt in die Durchsichtstabelle anzeigen; wobei der Eintritt, der durch die Hinweiszeigerinformationen angezeigt ist, eine Stelle voller Länge des ersten Datenelements umfaßt.

10. Gegenstand der vorhergehenden Ansprüche, wobei der Satz von Folgen Wörter umfaßt.

11. System, das den Gegenstand nach irgendeinem vorhergehenden Anspruch aufweist, wobei das System weiterhin einen Prozessor aufweist, der zum Zugreifen auf die Folgesatzdaten verbunden ist.

12. System nach Anspruch 11, das weiterhin Instruktionsdaten aufweist, die durch das Speichermedium gespeichert sind, wobei die Instruktionsdaten Instruktionen anzeigen, die der Prozessor ausführen kann, um eine Maschinensuche der Folgesatzdaten mit einer Folge von Zeichen durchzuführen; wobei der Prozessor für ein Zugreifen auf die Instruktionsdaten verbunden ist.

13. Verfahren zum Suchen von Folgesatzdaten mit einer Folge von Zeichen; wobei die Folgesatzdaten einen Satz von Folgen anzeigen; wobei die Folgesatzdaten eine Sequenz von Datenelementen umfassen, die ein erstes Datenelement umfassen;
wobei das erste Datenelement umfaßt:
Kennungsinformationen für das erste Element, die mindestens einen eines Satzes von Zeichentypen und Suchinformationen für das erste Element anzeigen;
wobei die Suchinformationen für das erste Element umfassen;
nächste Informationen für das erste Element, die anzeigen, ob das erste Datenelement ein nächstes Datenelement besitzt; und
alternative Informationen für das erste Element, die anzeigen, ob das erste Datenelement ein alternatives Datenelement besitzt;
wobei das Verfahren aufweist;
Zugreifen auf das erste Datenelement;
wenn ein momentanes Zeichen in der Folge die Kennungsinformationen für das erste Element anpaßt und die nächsten Informationen für das erste Element anzeigen, daß das erste Datenelement ein nächstes Datenelement besitzt, Zugreifen auf das nächste Datenelement basierend auf der Position in der Sequenz des ersten Datenelements; und
wenn ein momentanes Zeichen in der Folge nicht die Kennungsinformation für das erste Element anpaßt und die alternativen Informationen für das erste Element anzeigen, daß das erste Datenelement ein alternatives Datenelement besitzt, Zugreifen auf das alternative Datenelement basierend auf der Position in der Sequenz des ersten Datenelements.

## Revendications

1. Produit destiné à être utilisé dans une machine qui exécute une recherche avec une chaîne de caractères, comprenant :
un support de mémorisation destiné à mémoriser des données sous une forme accessible à la machine, et
des données d'un ensemble de chaînes mémorisées par le support de mémorisation, les données de l'ensemble de chaînes indiquant un ensemble de chaînes, les données de l'ensemble de chaînes comprenant une séquence d'éléments de données comprenant un premier élément de données, le premier élément de données comprenant :
des premières informations d'étiquette d'élément indiquant au moins l'un d'un ensemble de types de caractères et des premières informations de recherche d'élément qui peuvent être utilisées dans une recherche par la machine de la séquence d'éléments de données avec une chaîne de caractères,
les premières informations de recherche d'élément comprenant :
des premières informations d'élément suivant indiquant si le premier élément de données comporte un élément de données suivant vers lequel la recherche de la machine peut se poursuivre si un caractère en cours dans la chaîne correspond aux premières informations d'étiquette d'élément, l'élément de données suivant étant accessible sur la base de la position dans la séquence du premier élément de données, et
des premières informations de remplacement d'élément indiquant si le premier élément de données comporte un élément de données de remplacement vers lequel la recherche de la machine peut se poursuivre si le caractère en cours dans la chaîne ne correspond pas aux premières informations d'étiquette d'élément, l'élément de données de remplacement étant accessible sur la base de la position dans la séquence du premier élément de données.

2. Produit selon la revendication 1, dans lequel l'élément de données suivant du premier élément de données suit immédiatement le premier élément de données dans la séquence.

3. Produit selon l'une quelconque des revendications 1 ou 2, dans lequel l'élément de données de remplacement du premier élément de données suit immédiatement un second élément de données dans la séquence, le premier élément de données débutant une sous-séquence d'éléments de données qui se termine par le second élément de données, le second élément de données ne comportant pas d'élément de données suivant, la sous-séquence comprenant un premier nombre d'éléments de données qui ne comportent pas d'éléments de données suivants et un second nombre d'éléments de données qui comportent des éléments de données de remplacement, les premier et second nombres étant égaux.

4. Produit selon l'une quelconque des revendications précédentes, dans lequel le premier élément de données ne comprend qu'un octet unique, l'octet unique comprenant les premières informations d'étiquette d'élément et les premières informations de recherche d'élément.

5. Produit selon l'une quelconque des revendications précédentes, dans lequel le premier élément de données comprend des premier et second octets, le premier octet comprenant les premières informations d'étiquette d'élément et les premières informations de remplacement d'élément, le second octet comprenant les premières informations d'élément suivant, les premières informations d'élément suivant indiquant que le premier élément de données ne comporte pas d'élément de données suivant.

6. Produit selon l'une quelconque des revendications précédentes, dans lequel le premier élément de données comprend en outre des premières informations d'élément final, les premières informations d'élément final indiquant si la chaîne de caractères est dans l'ensemble de chaînes si le dernier caractère dans la chaîne correspond aux premières informations d'étiquette d'élément.

7. Produit selon l'une quelconque des revendications précédentes, dans lequel les données de l'ensemble de chaînes comprennent en outre un élément de données de pointeur qui comprend des informations de pointeur indiquant l'emplacement du premier élément de données.

8. Produit selon la revendication 7, dans lequel les informations de pointeur indiquent en outre un nombre des octets suivants, l'élément de données de pointeur et les octets suivants indiquant ensemble l'emplacement du premier élément de données.

9. Produit selon les revendications 7 ou 8, dans lequel les données de l'ensemble de chaînes comprennent en outre une table de consultation, les informations de pointeur indiquant une entrée dans la table de consultation, l'entrée indiquée par les informations de pointeur comprenant un emplacement à longueur complète du premier élément de données.

10. Produit selon les revendications précédentes, dans lequel l'ensemble des chaînes comprend des mots.

11. Système comprenant le produit selon l'une quelconque des revendications précédentes, le système comprenant en outre un processeur relié de façon à accéder aux données de l'ensemble de chaînes.

12. Système selon la revendication 11, comprenant en outre des données d'instructions mémorisées par le support de mémorisation, les données d'instructions indiquant des instructions que le processeur peut exécuter pour réaliser une recherche par la machine dans les données de l'ensemble de chaînes avec une chaîne de caractères, le processeur étant relié de façon à accéder aux données d'instructions.

13. Procédé de recherche dans des données d'un ensemble de chaînes avec une chaîne de caractères, les données d'ensemble de chaînes indiquant un ensemble de chaînes, les données d'ensemble de chaînes comprenant une séquence d'éléments de données comprenant un premier élément de données, le premier élément de données comprenant :
des premières informations d'étiquette d'élément indiquant au moins l'un d'un ensemble de types de caractères et des premières informations de recherche d'élément,
les premières informations de recherche d'élément comprenant :
des premières informations d'élément suivant indiquant si le premier élément de données comporte un élément de données suivant, et
des premières informations de remplacement d'élément indiquant si le premier élément de données comporte un élément de données de remplacement,
le procédé comprenant :
un accès au premier élément de données,
si un caractère en cours dans la chaîne correspond aux premières informations d'étiquette d'élément et que les premières informations d'élément suivant indiquent que le premier élément de données comporte un élément de données suivant, un accès à l'élément de données suivant sur la base de la position dans la séquence du premier élément de données, et
si un caractère en cours dans la chaîne ne correspond pas aux premières informations d'étiquette d'élément et que les premières informations de remplacement d'élément indiquent que le premier élément de données comporte un élément de données de remplacement, un accès à l'élément de données de remplacement sur la base de la position dans la séquence dû premier élément de données.
